# EUROPEAN PATENT APPLICATION

(11) **EP 4 198 796 A1**
(43) Date of publication of application: **21.06.2023**
(21) Application number: 22208263.8
(22) Date of filing: 18.11.2022
(51) Int. Cl.: G06F 21/86, G06F 21/81, H04L 9/40, G06F 21/44, G06F 21/62, G06F 21/72

(54) **AN ELECTRONIC SYSTEM FOR THE PHYSICAL PROTECTION OF A COMPUTER SYSTEM AND THE PROTECTION OF ITS CRYPTOGRAPHIC KEYS**

(30) Priority: 15.12.2021 IT 202100031439
(71) Applicant: MBDA ITALIA S.p.A., 00131 Roma (IT)
(72) Inventor: Di Maio, Valerio, I-00131 ROMA (IT); Silvestro, Carmelo, I-00131 ROMA (IT); De Paoli, Emiliano, I-00131 ROMA (IT)
(74) Representative: Perronace, Andrea

(57) **Abstract**

The present invention relates to an electronic system which mainly ensures the physical security of a complex computer system and the security of the cryptographic keys thereof. The device allows operating in operation environments with stringent environmental features, typical of military systems deployed in the operation scene. The device further allows implementing configurable policies which can best respond to the level of customization required for the operation context in which there is a computer system, whereby distinct reactions are possible (either invasive reactions, i.e., purge, physical erasing, or only informative reactions, i.e., logs and diagnostic visual alarms on screen and/or through LED lights) following the detection of an unauthorized attempted access (tamper detection) to the protected platform.

The device according to the invention implements a client-server architecture, sharing the same electronic board which can be customized as a client or server, by means of a configuration at startup, ensuring a cost optimization of development, production and logistics management of spare parts.

## Description

The present invention relates to an electronic system for the physical protection of the cryptographic keys of a computer system, which are erased as a consequence of a physical tampering attempt.

### Background art

In the operation context, a weapon system can be deployed in high-risk areas, whereby the Armed Forces must face the issue of ensuring the correct operation thereof and the achievement of the objectives of the military mission. Unauthorized access to the system components must be avoided and, in case of loss of control of the system in the battlefield, the timely and secure erasing of critical information (of classified and/or mission critical type) contained therein must be ensured before enemy forces take possession thereof.

To this end, a remote and centralized management of the system, in relation to the security thereof, is desired, while also ensuring the independence of the system. It is still desirable to instantly erase the cryptographic keys and the content of the persistent memory supports (encrypted with such keys) in both software mode and hardware mode, if provided, in the latter case, with an external pin to activate the hardware erase feature.

The need is thus felt for an innovative solution to solve the issue of anti-tampering management in a complex system. This management is known to be difficult since it is necessary to ensure the physical security of the apparatuses while allowing the operators to act on the apparatuses and/or carry out any maintenance procedures without risking to involuntarily activate the anti-tampering system with the possible erasing of the data contained in the apparatus. On the contrary, it is desirable that the operator, if authorized, can temporarily disable the centralized monitoring to allow performing maintenance operations on the apparatus in a completely secure manner.

### Purpose and object of the invention

It is the object of the present invention to provide an anti-tampering device which solves the problems and overcomes the drawbacks of the prior art.

The present invention relates to a device according to the appended claims.

### Detailed description of embodiments of the invention

### List of drawings

The invention will now be described by way of nonlimiting illustration, with particular reference to the drawings of the accompanying figures, in which:
- Figure 1 shows a client/server architecture for the system according to the invention, according to an embodiment thereof;
- Figure 2 shows in detail some elements of which each sub-system of the system can be made up according to the invention, according to an aspect of the invention:
- Figure 3 describes in detail the logical flows of the Server components and of a generic Client and the relationships between the two, according to an aspect of the invention; and
- Figure 4 shows an example of the system policy management engine, in accordance with an embodiment of the invention.

It is worth noting herein that elements of different embodiments can be combined together to provide further embodiments without restrictions by respecting the technical concept of the invention, as those skilled in the art will effortlessly understand from the description.

The present description also relates to the prior art for the implementation thereof, regarding the detail features not described, such as elements of minor importance usually used in the prior art in solutions of the same type, for example.

When an element is introduced, it is always understood that there can be "at least one" or "one or more".

When a list of elements or features is listed in this description, it is understood that the finding according to the invention "comprises" or alternatively "consists of" such elements.

When listing features within the same sentence or bullet list, one or more of the individual features can be included in the invention without connection to the other features in the list.

### Embodiments

The invention provides an effective response to the above issues, by means of a cutting-edge technical solution, allowing a complete and secure management of an anti-tampering sensor kit with which a weapon system/sub-system can be equipped. By way of explanation, but not by way of limitation, MBDA ATM can manage temperature, voltage, pressure, optical, volumetric (infrared and/or microwave) and mechanical tampering sensors, such as mechanical switches and metal mesh protection. A mix of mechanical and optical sensors can already constitute an excellent combination against unauthorized access to electromechanical racks or enclosures housing Single Board Computers therein.

The system according to the invention can be based on a client/server architecture to allow a remote and centralized management (through a primary or central server) of the sensors and a peripheral management of the so-called clients (or "client electronic devices"), which are located within sub-systems, thus ensuring the protection and security of the System even if the server is not available or not reachable at a local network connectivity level.

Furthermore, the system according to the invention instantly allows the cryptographic keys and the content of the persistent memory supports (encrypted with such keys) to be erased in both software mode and hardware mode, if provided, in the latter case, with an external pin to activate the hardware erase feature.

The main purpose of the server is to configure the security policies of the clients, while the monitoring of the remote sensors, and any technical reaction to the violation of the defined policies, i.e., the execution of an action, is the task of the clients.

To ensure confidentiality, authenticity and reliability of the messages exchanged between the server and the clients thereof, each device according to the invention is provided with a Hardware Security Module (HSM) for managing (e.g., generating, archiving) the cryptographic keys to be used for client/server communication and for executing cryptographic primitives in a completely secure manner, without requiring the keys to ever be exported from the HSM itself. Basically, the ATM device according to the invention is provided with Secure Elements which allow saving cryptographic information and performing high-speed cryptographic functions, thus ensuring the integrity and authentication of the information. The Secure Elements have an IT assurance level which is typical of the smart cards also used in financial fields.

The system described herein is an innovative solution for solving the issue of managing anti-tampering sensors in a complex System. This management is known to be difficult since it is necessary to ensure the physical security of the apparatuses while allowing the operators to act on the apparatuses and/or carry out any maintenance procedures without risking to involuntarily activate the anti-tampering system with the possible erasing of the data contained in the apparatus. On the contrary, by virtue of the proposed solution, the operator, if authorized through a system of certificates (e.g., Smart Card, USB or wireless Hardware Token), can temporarily disable the monitoring on any client of the system to allow performing maintenance operations on the apparatus in a completely secure manner.

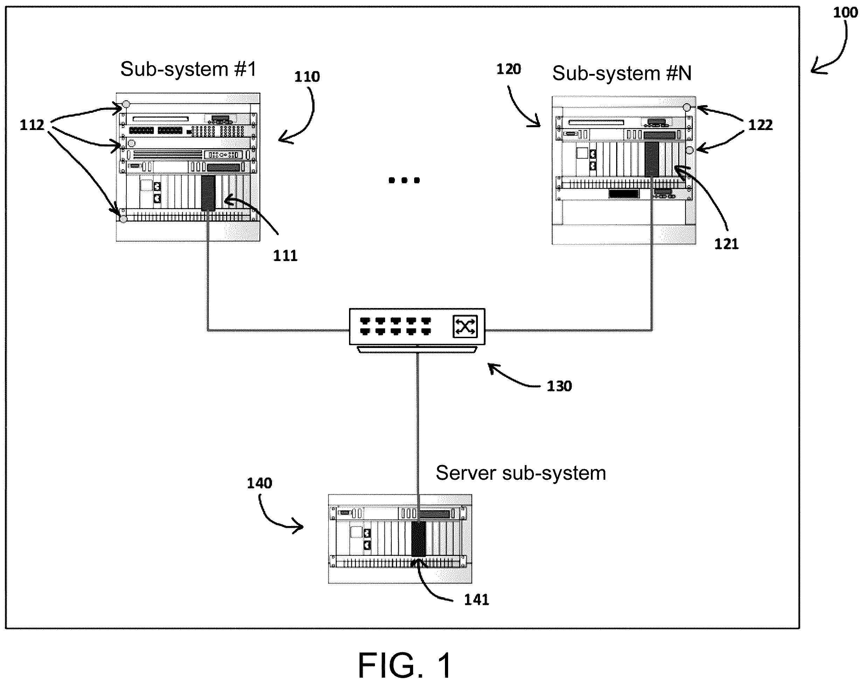

The client/server architecture 100 is described in Figure 1; it comprises the following elements:
- N client sub-systems 110, 120 - i.e., N sub-systems to be protected (for example, racks);
- a central server 140 - for the centralized management of clients;
- anti-tampering sensors 112 and 122 - for detecting physical tampering attempts which are performed on the Sub-Systems.

Optionally, in order to ensure the interconnection between the various devices, a switch or gateway 130 (or other suitable means of the client and/or server or third parties) is indicated in Figure 1 - to allow communication between the clients and the server.

Each sub-system is provided with a Client module (ATM) 111, 121, while the central server is provided with respective server modules (ATM) 141. The modules can be the same for client and server, apart from being initialized differently.

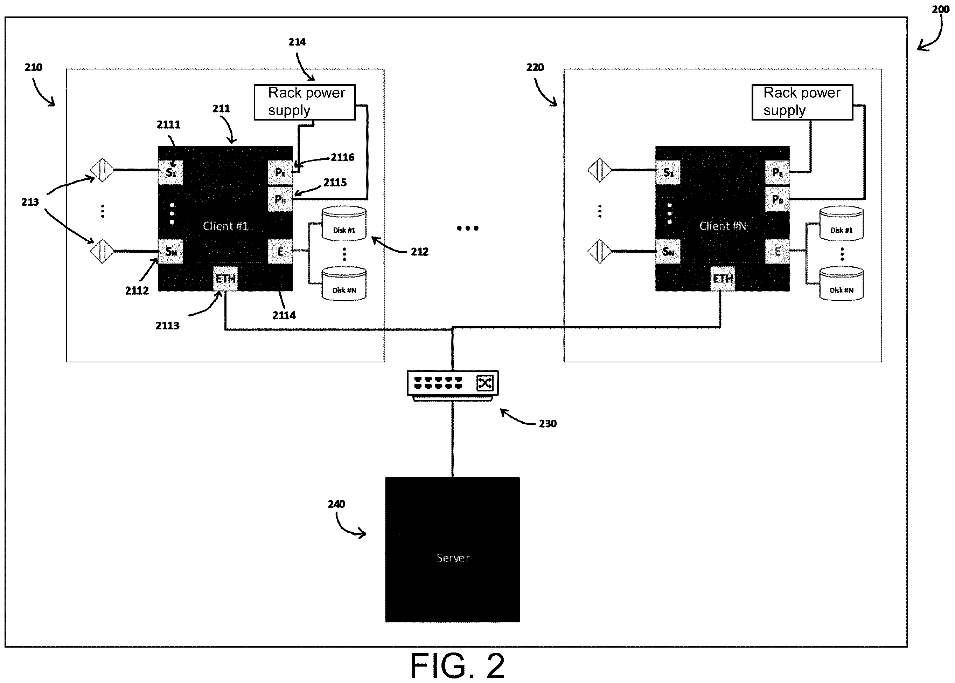

Figure 2 describes in detail the essential elements forming each sub-system 210, 220, namely:
- Client Module 211;
- Mass storage device 212 with Hardware Pin Erase capability;
- Kit (set of one or more) of anti-tampering sensors 213 configured to detect the physical tampering attempts of the one or more client electronic devices;
- One or more power supplies 214 (or "power supply system") of the client device (e.g., rack).

The client module can also be provided with an inlet for a backup battery to ensure operation in case of power failure.

During the installation and configuration step, the correct coupling or pairing between the server and client modules must be carried out, which will be made possible by properly using asymmetric cryptography (for example, RSA, ECDSA algorithms) through an inherently known or future data communication network. Each client module will be capable of generating a pair of keys therein and will securely export the public key to the server module which will be capable of inserting it into a list of authorized clients (whitelist) based on the respective public keys received. Each client will be capable of internally containing the public key of the only server with which it is authorized to communicate. Communications between client and server can be secured, mainly ensuring integrity and authenticity, using a digital signature (e.g., hashing messages using the private key of the client, which hashes can be encrypted with algorithms such as RSA/ECDSA).

Thereby, the solution will be strong against attacks such as "man in the middle", "replay attacks", "spoofing or impersonating", etc. The type of messages transiting between server and client modules does not require further protection to ensure confidentiality of the data in transit, since the messages exchanged do not need to be protected from exfiltration.

During the operation state, the client module 211 constantly monitors the sensors 213 to which it is connected through the respective interfaces 2111, 2112. If one of the sensors 213 detects either a tampering attempt or a physical intrusion attempt, the unit can erase the content of the disks (or mass storage devices) 212 through the interface 2114; furthermore, it can disable, or reset, the power supply of the entire sub-system by directly controlling the power supplies of the rack 214 through the interfaces 2115 and 2116. Disabling the power supply of the sub-system allows avoiding that it is used improperly or, in case of implementing the encryption of the mass storage thereof (data confidentiality at rest), it would make the sensitive information stored therein inaccessible. This operation on the power supply is possible in both the presence and absence of communication with the central server.

The operation of the system is ensured regardless of the availability of the Server module 240 and/or of the central gateway 230 since the monitoring and activation of the interfaces can directly occur on the Client unit 211.

The ethernet interface 2113 can be used to receive from the central Server 240 the security policies used to configure each client unit 211, which will then be respected regardless of the availability of the Server 240. The interface 2113 can be used by the Client to send the logs thereof (using standard protocols such as syslog, syslog-ng, rsyslog, etc.) and/or any alarms signaling tampering/physical intrusion to the central unit 240. Finally, the interface 2113 can be used by the Server module 240 to enable the interface 2114 on the client unit 211 and instantly erase the content of all the disks 212 present in the sub-system 210, through a specific erasing command/message/instruction. The reliability of this message, in order to avoid involuntary erasing of the sub-systems, is ensured by a sequence of ad hoc messages which guarantees a very low probability that this message is involuntarily generated by random errors which can arise during the normal operation of the system 200.

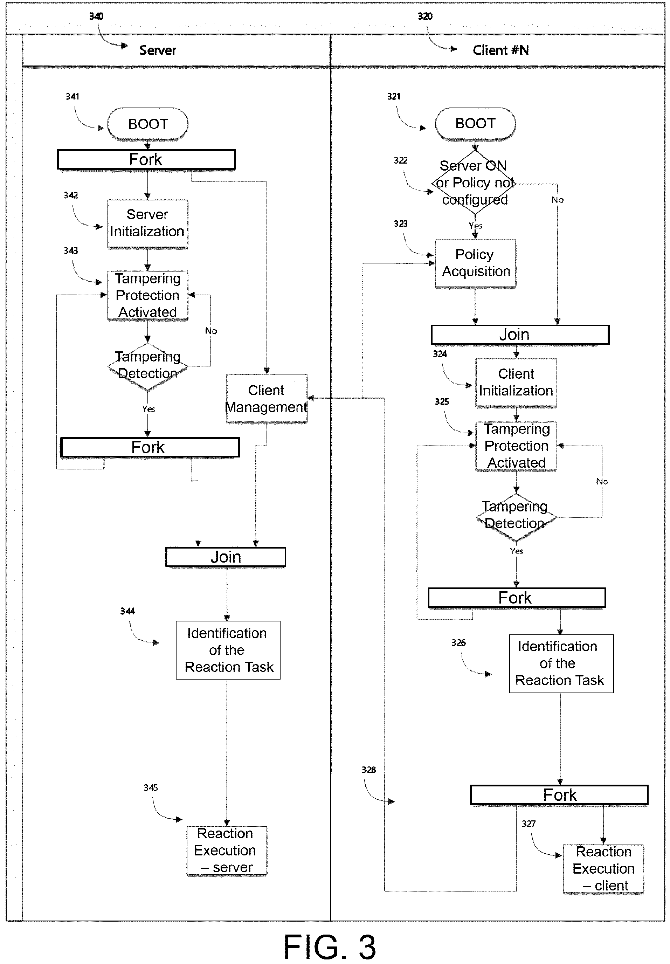

Figure 3 describes in detail the logical flows of the Server components and of a generic Client and the relationships between the two.

In particular, by first analyzing the server component 340, it is possible to follow the entire process and the initial booting step 341 during which activities preliminary to the system operation and the subsequent Server Initialization step 342, within which the local policies which will be used to define the next steps are searched and loaded, are carried out.

In particular, the policy can be seen as a rule which can contain a set of security policies including instructions for reacting to the data detected by said one or more anti-tampering sensors. For example, in greater detail, it can contain the following elements:
- "trigger origin",
- "range" or activation conditions,
- "reaction/effect" against "trigger origin" in compliance with the activation conditions of the "range".

The "trigger origin" (which occurs within the condition range) is the element triggering the "Tampering Detection" event, downstream of which the configured effect will be performed, and can be an identifier of the alarm type defined based on the data detected by said one or more anti-tampering sensors. The range comprises conditions for reacting to the type of alarm.

Once all the policies have been loaded, the server switches to "Tampering Protection Activated" mode 343 and remains in such a mode until a tampering event is detected (or until the system is shut down).

Following the detection of the tampering event, the system, in addition to returning to the "Tampering Protection Activated" mode 343, runs the engine for managing the event identified as "Identification of the Reaction Task" 344.

Within the "Identification of the Reaction Task" task 344, the system automatically selects the counter-reaction which must be performed and defined within the policies in the form of an effect.

The counter-reaction possibilities can be several, and conditional to the "trigger origin" and the range of activation conditions. Here are, by way of example, some indicative policies to clarify this aspect:
Policy 1:
   Trigger origin: brightness sensor
   Range: < 10 lumen
   Reaction/effect: sending warning message
Policy 2:
   Trigger origin: brightness sensor
   Condition range: > 11 lumen
   Reaction/effect: sending purge command
Policy 3:
   Trigger origin: movement sensor AND brightness sensor
   Condition range: >X AND <Y
   Reaction/effect: sending message

As it can be seen, all policy fields allow a complex rule formulation.

For a detailed description of the policy management engine (or module), reference should be made to Figure 3.

As a last step, the system executes the "effect" defined in the policies ("Reaction Execution" 345). The list of possible counter-reactions (effects) can vary from the simple tracking of the event in the system logs, to the more invasive sending of the command for purging the disks and shutting down the system, passing through a series of intermediate levels (for example, visual alarm, such as switching the LED light on, or acoustic alarm, alarms which can be controlled based on the aforesaid reaction instructions). The possible gradation of the type of effect is also part of the level of configurability of the policies.

The Client component #N 320 also has an initial booting step 321, after which the first check 322 is performed: if the server component is connected, or, if the policies have not been acquired locally, the system tries to connect to the server so as to receive the policies.

Once the policies have been acquired from the server 323 (but also when the client has already previously acquired policies and there is no active connection with the server), a sequence of tasks is performed which is entirely equivalent to what has been previously described with regard to the server 340. In detail, an initialization step 324 will be carried out and then the system will perform the "Tampering Protection Activated" task 325.

Following the detection of the tampering event, the client system, in addition to returning to the "Tampering Protection Activated" mode (325), runs the engine for managing the event identified as "Identification of the Reaction Task" 326, where the reaction which will be performed in the "Execution Reaction" task 327 will be selected.

During this step, the difference with respect to server-side management is the addition of a new signal 328 towards the server, which then allows a further centralized level of effect management.

In practice, after detecting the physical intrusion/tampering attempt, the client carries out the following further step:
- sending 328 to the server, as soon as the communication means 130 are active, a series of information including: unique ID of the client, details of either the tampering attempt or physical intrusion attempt, unique ID of the locally stored security policy to be applied or already applied.

On the server side, this executes logics (known *per se*) for evaluating the type of further reaction intervention to be activated by the one or more client electronic devices, and sends new security policies and/or commands to a subset of one or more client electronic devices.

This further management, performed on the server side, is particularly effective if the client has to detect, and above all to react to, a tampering attempt perpetrated during a period of disconnection from the server. In such circumstances, the client stores policies which are potentially not perfectly aligned either with the server or with the other clients which, instead, are still connected. Therefore, the consequence is the application of reaction countermeasures being not fully compliant and therefore only partially effective.

The report in 328 contains some important information for the server, including: unique ID of the client, details of the recorded tampering (sensors which detected the tampering, date, time, etc.), unique ID of the applied policy and possibly the log relating to the application of the reaction. Such a signal can be transmitted to the server at the same time as the detection of the tampering, if at that moment client and server are connected to each other, or it will be transmitted as soon as the connection is restored.

Once the signal has been received, the server, within the "Client Management" function, executes logics for evaluating the type of reaction intervention to be activated, for example, it could be necessary to signal the detection to the other clients connected, so that they apply the reaction policies, or, in the case of a previously isolated client, an immediate push of new reaction rules could be provided to obtain a more efficient effect, more balanced with the rest of the system.

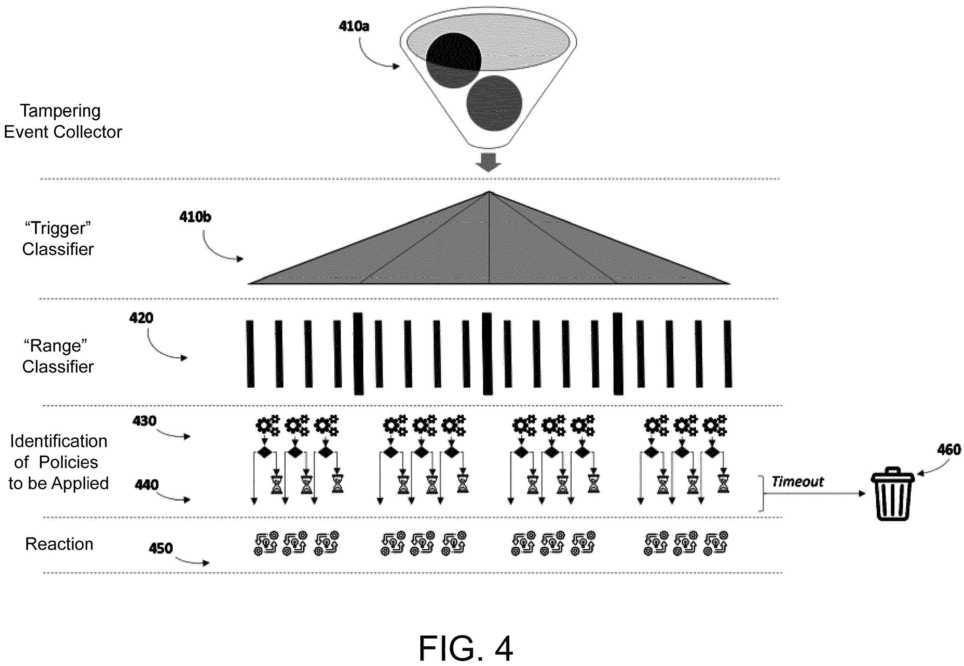

Figure 4 allows describing in detail the operation principle of the system from the moment of detecting the event to the effect application.

As input to the algorithm, each detection brings two attributes therewith, required for the correct selection of the counter-reaction: the sensor which has detected the anomaly and the associated range value.

As it can be seen, all the detections are processed centrally by an element 410a which, depending on the type of sensor which generated them, sorts them 410b at a second filter level 420. In this second level 420, these events are divided again, this time based on the value of the range.

At the end of the classification step, the fourth level of the process is dedicated to the identification of the policy 430. If the policy is built for a single detection, then the system performs the associated reaction 450. If, instead, the policy is built with several detections (in AND and/or in OR with one another), the (temporal) reconciliation 440 is carried out again at this level, waiting for all the other events to be detected before moving on to the next level.

The time within which the system waits for the reconciliation is configurable. When the timeout is exceeded, the detection is taken out of the system and discarded in 460 since it has not met any policy.

Two or more of the parts (elements, devices, systems) described above can be freely associated and considered as parts kit according to the invention.

### Advantages of the invention

Unlike the current anti-tampering modules existing on the market, the invention exploits a client/server architecture to ensure maximum security and flexibility.

Within the logics of the ATM module, there are mechanisms for both the synchronous and deferred management of reactions (application of countermeasures). In particular, the ATM module improves the protection of systems which do not ensure a continuous data connection of the internal components (or sub-systems); in such a context, in fact, a communication between the server and the various clients has been provided, precisely to optimize and best balance the application of the reactions, even in the case of a momentary or prolonged period of disconnection and isolation. The ATM module of the invention must be preliminarily configured in hardware mode, only once in an irreversible manner, to operate in "Client mode" or "Server mode". The set mode cannot be changed later for security reasons.

Furthermore, the form factor XMC is Switched Mezzanine Card, the known standard VITA 42.3 is an advantageous aspect since it can be used without issues in the military field or in environments requiring the fulfillment of stringent environmental requirements.

A typical case of using the device according to the invention is a weapon system, and specifically within a Tactical Operation Center (ToC) or on a missile launcher, on board of which there are several rack sub-systems containing sensitive, often classified, information. By providing each rack with the ATMs according to the invention, it is possible to protect the information contained in these systems, preventing such information from falling into enemy hands, wherever it is necessary to abandon the system and, in any case, preventing an unauthorized maintainer from attempting to access parts of the system.

The ATM device could also be applied to the civil world in a context of critical infrastructures, for example in the field of data center, to protect several rack sub-systems of a Data Processing Centre (DPC).

Preferred embodiments have been described above and some variants of the present invention have been suggested, but it is understood that those skilled in the art may make modifications and changes without departing from the related scope of protection, as defined by the appended claims.

## Claims

1. An electronic system (100) for the physical protection of the cryptographic keys of a computer system, comprising:
- one or more client electronic devices (110, 120, 210, 220);
- a central server (140, 240, 340) for the remote and centralized management of the one or more client electronic devices;
wherein each of said one or more client electronic devices (110, 120, 210, 220) includes:
- a client module (211);
- at least one mass storage device (212) configured to enable a Hardware Pin Erase;
- one or more anti-tampering sensors (112, 122, 213) configured to detect the physical tampering attempts of said one or more client electronic devices;
- a power supply system (214);
- communication means (130) for the communication with the central server;
and wherein each of said one or more client electronic devices (110, 120, 210, 220) is configured to:
A. perform a pairing with said server (140, 240, 340) using an asymmetric encryption algorithm, by means of a data communication network;
B. locally receive and store a set of security policies which include instructions for reacting to the data detected by said one or more anti-tampering sensors (112, 122, 213);
C. constantly monitor said one or more anti-tampering sensors (112, 122, 213) to which each of said one or more client electronic devices (110, 120, 210, 220) is connected by means of respective interfaces (2111, 2112) so as to detect either a tampering attempt or a physical intrusion attempt;
D. if one of said one or more anti-tampering sensors (112, 122, 213) detects either a tampering attempt or a physical intrusion attempt, erase the contents of said at least one mass storage device (212), whether or not there is a connection with said central server; and
E. disable, or reset, said power supply system (214) by means of respective power supply system interfaces (2115, 2116), whether or not there is a connection with said central server;
and wherein, after step C, the following further step is carried out:
F. send (328) to the server, as soon as the communication means (130) are active, a series of information including: unique ID of the client, details of either the tampering attempt or physical intrusion attempt, unique ID of the locally stored security policy to be applied or already applied;
and wherein, on the server side, it executes logics for evaluating the type of further reaction intervention to be activated by the one or more client electronic devices (110,120,210,220), and sends new security policies and/or commands to a subset of the one or more client electronic devices.

2. A system according to claim 1, wherein each of said one or more electronic client devices (110, 120, 210, 220) is configured to send its own logs and/or physical tampering alarms to the central server (140, 240, 340) .

3. A system according to claim 1 or 2, wherein each of said one or more client electronic devices (110, 120, 210, 220) is configured to receive a command from said central server (140, 240, 340), an instruction for erasing the content of said at least one mass storage device (212).

4. A system according to one of claims 1 to 3, wherein the set of security policies comprises rules including the following elements:
- an identifier of the type of alarm defined on the basis of the data detected by said one or more anti-tampering sensors;
- reaction conditions for the type of alarm; and
- instructions for reacting based on said identifier in compliance with the reaction conditions.

5. A system according to claim 4, wherein said one or more client electronic devices (110, 120, 210, 220) comprise audible and/or visual alarm means which are controllable on the basis of said reaction instructions.

6. A system according to claim 4 or 5, wherein, in the case where said reaction instructions are a function of several detections of said one or more anti-tampering sensors, said one or more client electronic devices (110, 120, 210, 220) are configured to temporally reconciliate (440) the detections before executing the reaction instructions.

7. A system according to claim 6, wherein said one or more client electronic devices (110, 120, 210, 220) are configured to temporally reconciliate (440) the detections within a predefined time from the first detection in chronological order.

8. A system according to one of claims 1 to 7, wherein each of said one or more client electronic devices (110, 120, 210, 220) is configured to perform said pairing with said server (140, 240, 340) by carrying out the following steps:
- generating and storing a pair of public and private keys therein;
- exporting the public key to the central server using a digital signature;
wherein the central server is configured to insert each of said one or more client electronic devices (110, 120, 210, 220) in a list of client electronic devices which are authorized on the basis of the respective public keys received.

9. A system according to claim 9, wherein said digital signature comprises a hashing function on the basis of a private key for each of said one or more client electronic devices (110, 120, 210, 220).
